# EUROPÄISCHE PATENTSCHRIFT

(11) **EP 1 843 558 B1**
(45) Veröffentlichungstag und Bekanntmachung des Hinweises auf die Patenterteilung: **09.03.2011**
(21) Anmeldenummer: 07105485.2
(22) Anmeldetag: 02.04.2007
(51) Int. Cl.: H04M 1/02, H05K 5/00, H05K 5/02, F16B 5/06

(54) **Verschlussmechanismus für ein Gehäuse einer Hauskommunikationsanlage**
Locking mechanism for a housing of an indoor communication system
Mécanisme de verrouillage d'un boîtier pour un système de communication à domicile

(30) Priorität: 04.04.2006 DE 202006005366 U
(43) Veröffentlichungstag der Anmeldung: 10.10.2007
(73) Patentinhaber: GIRA Giersiepen GmbH & Co. KG, 42477 Radevormwald (DE)
(72) Erfinder:
(74) Vertreter: Patentanwälte Dr. Solf & Zapf

(56) Entgegenhaltungen:
- DE-A1- 2 921 485
- DE-C1- 19 836 435
- US-A- 4 851 811
- US-A- 5 509 057

## Beschreibung

Die vorliegende Erfindung betrifft ein elektrisches Gerät, insbesondere eine Sprechstation für eine Hauskommunikationsanlage, gemäß dem Oberbegriff des Patentanspruchs 1.

Ein derartiges elektrisches Gerät ist in einer Ausführung als Türsprechanlage aus dem Dokument DE 29 21 485 A1 bekannt. Diese bekannte Türsprechanlage besteht aus einem Einbaugehäuse, dessen Vorderseite mit einem Deckel lösbar verbunden ist. An dem Deckel sind bestimmte elektrische Bauteile befestigt, mit denen er somit einen Geräteeinsatz bildet. Der Deckel ist an einer Gehäusekante mittels einer Scharnierverbindung sowie mittels gegenüberliegender lösbarer Verschlüsse gehalten. Das Einbaugehäuse ist zur Installation in einer Wand konzipiert, indem es eingermauert werden soll, Dabei ist ein sehr exaktes Einsetzen und Einputzen erforderlich, damit das Einbaugehäuse mit seiner Vorderseite genau in der Wandebene liegt, Nur dann kann erreicht werden, dass der Deckel in seiner Schließstellung auch am Rand der umgebenden Wandung aufliegen kann, ohne dass dabei die Schließfunktion beeinträchtigt wird. In der Praxis ist allerdings ein derart exaktes Einputzen in aller Regel nicht möglich. Daher wird in den meisten Fällen die gewünschte exakte Anlage des Deckels an der umgebenden Wandung nicht erreicht werden können.

Bei weiteren ähnlichen Geräten wird häufig der Geräteeinsatz über Schraubverbindungen in dem Aufnahmegehäuse befestigt (vgl. das Dokument DE 198 36 435 C1). Dies hat den Nachteil einer relativ umständlichen und zeitaufwendigen Montage. Zudem ist eine Demontage auch durch nicht autorisierte Personen möglich, indem zum Lösen von Schraubverbindungen übliche Werkzeuge verwendbar sind.

Es sind auch Geräte bekannt, bei denen der Geräteeinsatz in das dosenartige Aufnahmengehäuse eingerastet werden kann. Dies führt im Falle einer Unterputz-Montage (UP-Installation) bzw. einer Hohlwand-Installation, wobei das Aufnahmegehäuse versenkt in eine Wandfläche eingeputzt oder in eine Hohlwand eingesetzt wird, ebenfalls zu dem Nachteil, dass sich unterschiedliche Einsenktiefen des Aufnahmegehäuses auch in unterschiedlichen Positionen des Geräteeinsatzes relativ zu der Montage-Bezugsebene (Wandfläche) auswirken.

Der vorliegenden Erfindung liegt die Aufgabe zugrunde, ein Gerät der beschriebenen Art zu schaffen, bei dem der Geräteeinsatz auf schnelle und einfache Weise sowie auch mit einer hohen Sicherheit gegen nicht autorisiertes Lösen und mit einer exakten Ausrichtung relativ zu einer Montage-Bezugsebene in dem Aufnahmegehäuse befestigbar ist.

Erfindungsgemäß wird dies durch die Merkmale des Anspruchs 1 erreicht. Vorteilhafte Ausgestaltungen der Erfindung sind Gegenstand der abhängigen Ansprüche.

Demnach sind die Haltemittel als formschlüssig fügbare Rastverbindungen ausgebildet, wodurch eine einfache und schnelle Montage durch einfaches Einsetzen des Geräteeinsatzes in das Aufnahmegehäuse erreicht wird. Dabei ist der Geräteeinsatz selbsttätig formschlüssig einrastbar. Zudem wird durch den Formschluss eine hohe Sicherheit gegen unberechtigtes Lösen erreicht. Für ein autorisiertes Lösen ist bevorzugt vorgesehen, dass mindestens eine der Rastverbindungen ein zum Verriegeln bzw. Entriegeln mittels eines speziellen Werkzeuges zwischen einer Verriegelungsstellung und einer Lösestellung bewegbares Riegelteil aufweist. Somit ist ein Lösen nicht ohne das spezielle Werkzeug möglich.

Weiterhin sind die Rastverbindungen erfindungsgemäß in einer zu der Deckplatte im Wesentlichen senkrechten Richtung gesehen derart verstellbar und in unterschiedlichen Einstellpositionen fixierbar, dass der Geräteeinsatz bzgl. seiner eingesetzten und verrasteten Einbaustellung relativ zu dem Aufnahmegehäuse in der zu der Deckplatte im Wesentlichen senkrechten Richtung ausrichtbar ist. Durch diese Ausrichtung relativ zu dem Aufnahmegehäuse ist folglich auch eine Ausrichtung des Geräteeinsatzes relativ zu der jeweiligen auf die ortsfeste Befestigung des Aufnahmegehäuses bezogenen Montage-Bezugsebene möglich. So ist erfindungsgemäß das Aufnahmegehäuse zur Unterputz-(bzw. Hohlwand-) Installation konzipiert, wobei es in einem installierten Zustand mit einer bestimmten Mindest-Einsenktiefe versenkt in einer Wand-Montagefläche anzuordnen ist. Hierbei sind nun die Rastverbindungen derart einstellbar, dass - unabhängig von der jeweiligen Einsenktiefe des Aufnahmegehäuses gegenüber der Montagefläche - die Deckplatte mit einem die Grundfläche des Aufnahmegehäuses überragenden Rand im eingesetzten und verrasteten Zustand des Geräteeinsatzes zur definierten Anlage auf der umliegenden Montagefläche gelangt, und zwar insbesondere mittelbar über eine Dichtung. Für diese Einstellbarkeit ist es vorteilhaft, dass die Rastverbindungen auf der Seite des Aufnahmegehäuses letzteres nach außen überragende Auflagelemente zur Auflage auf der Montagefläche aufweisen. Dadurch wird ein definierter Bezug der Rastverbindungen zur Montagefläche erreicht, so dass eine sehr exakte und auch einfach und schnell durchführbare Einstellung relativ zur Montagefläche möglich ist, und zwar unabhängig von unterschiedlichen Einsenktiefen des Aufnahmegehäuses.

Weitere vorteilhafte Ausgestaltungsmerkmale der Erfindung werden auch in der folgenden Beschreibung noch erläutert werden.

Anhand eines in Zeichnung veranschaulichten, bevorzugten Ausführungsbeispiels soll die Erfindung genauer erläutert werden. Dabei zeigen:
- Fig. 1: eine Perspektivansicht eines erfindungsgemäßen Gerätes in einem noch nicht installierten, aber zusammengefügten Zustand seiner Teile,
- Fig. 2: einen Schnitt in einer vertikalen Schnittebene II - II gemäß Fig. 1 im installierten Zustand, und zwar in Unterputz-Installation,
- Fig. 3: eine Perspektivansicht nur des Aufnahmegehäuses,
- Fig. 4: eine Perspektivansicht eines Einzelteils mit Bestandteilen zweier erfindungsgemäßer Rastverbindungen,
- Fig. 5: eine Perspektivansicht eines weiteren Einzelteils mit einem Bestandteil einer der Rastverbindungen,
- Fig. 6: eine vergrößerte Teilansicht des Bereichs VI in Fig. 3,
- Fig. 7: eine perspektivische Ansicht der Deckplatte des Geräteeinsatzes, und zwar auf deren Geräte-Innenseite,
- Fig.8: eine Ansicht ähnlich Fig. 6 mit zusätzlichen Bestandteilen, die eigentlich an der Deckplatte angeordnet sind,
- Fig. 9: einen vergrößerten Teilschnitt in der Ebene IX- IX gemäß Fig. 1,
- Fig. 10: eine Teil-Perspektivansicht auf die Oberseite des Aufnahmegehäuses zur Erläuterung des Lösevorgangs,
- Fig.11: eine Ansicht ähnlich Fig. 10 auf die Unterseite des Aufnahmegehäuses,
- Fig. 12: eine perspektivische Schnittansicht in einer vertikalen Schnittebene im unteren Bereich des Gerätes in einer vorteilhaften Ausgestaltung, und zwar mit zusätzlichen Montagehaltern,
- Fig. 13: eine perspektivische Teil-Explosionsansicht des Aufnahmegehäuses nach Fig. 12 und
- Fig.14: eine Teil-Perspektivansicht des Aufnahmegehäuses in einer Montagestellung mit über die Montagehalter fixierter Deckplatte.

In den verschiedenen Figuren der Zeichnung sind gleiche Teile stets mit den gleichen Bezugszeichen versehen.

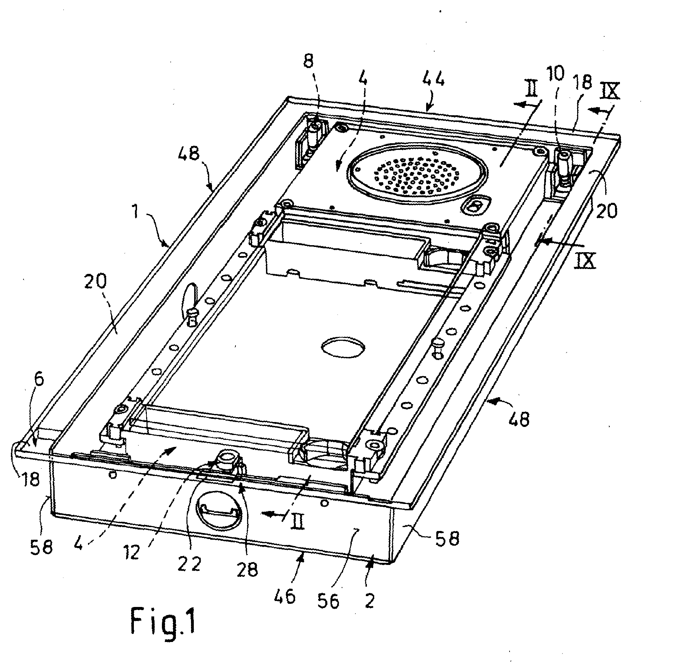

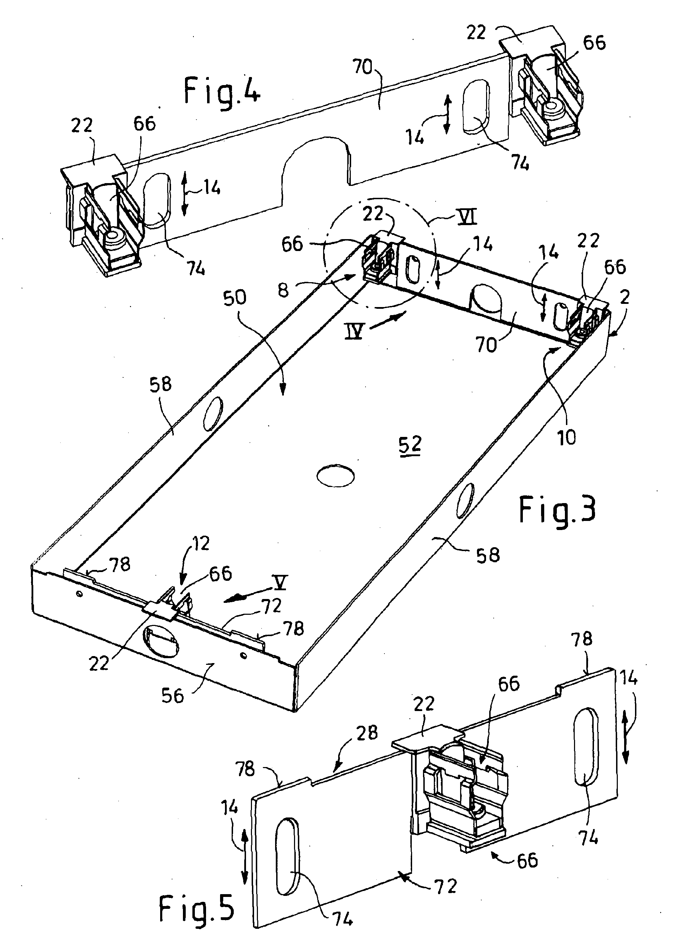

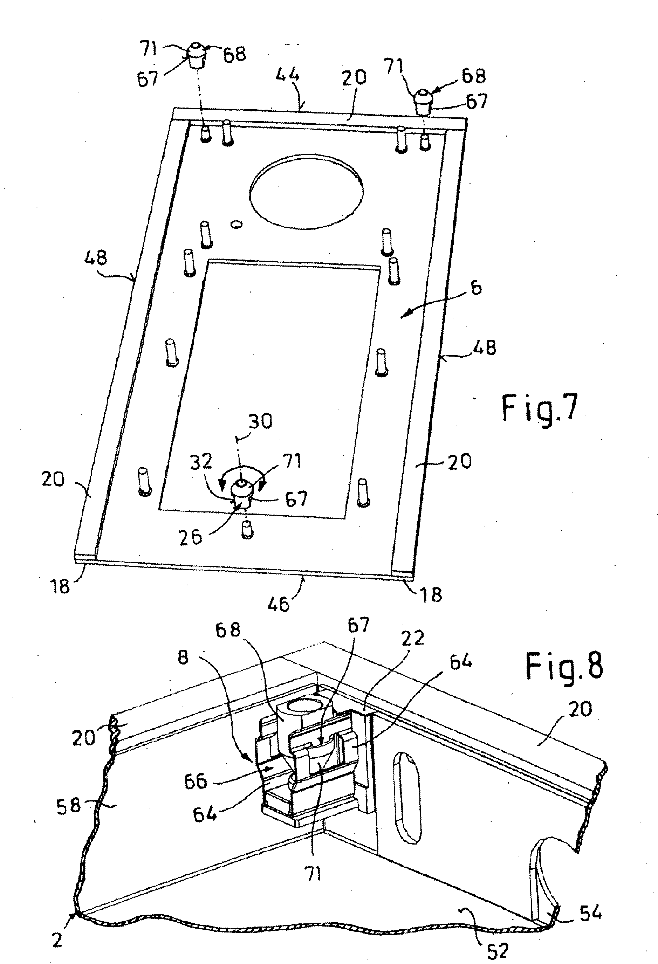

In Fig. 1 ist ein erfindungsgemäßes Gerät 1 fiktiv teiltransparent dargestellt; es besteht aus einem dosenartigen Aufnahmegehäuse 2 (siehe auch insbesondere die gesonderte Darstellung in Fig. 3) und einem in das Aufnahmegehäuse 2 einzusetzenden und über Haltemittel lösbar zu befestigenden Geräteeinsatz 4 mit einer vorderen (äußeren) Deckplatte 6 (vgl. hierzu auch Fig. 7). Die Deckplatte 6 ist in Fig. 1 künstlich transparent dargestellt, um eine Einsicht auf innere Bestandteile zu gewähren. In der Realität besteht die Deckplatte 6 bevorzugt aus einem nicht transparenten Material, beispielsweise aus einem Metall (Aluminium oder Edelstahl).

In der bevorzugten Ausführung erfolgt die Befestigung des Geräteeinsatzes 4 in dem Aufnahmegehäuse 2 mittelbar über die Deckplatte 6, indem der Geräteeinsatz 4 bzw. dessen Bestandteile an der Innenseite der Deckplatte 6 befestigt ist bzw. sind, und indem die Deckplatte 6 über formschlüssig fügbare Rastverbindungen 8, 10, 12 mit dem Aufnahmegehäuse 2 verbindbar ist.

Erfindungsgemäß sind diese Rastverbindungen 8, 10, 12 in einer zu der Deckplatte 6 im Wesentlichen senkrechten Richtung gesehen (vgl. hierzu die Doppelpfeile 14 z. B. in Fig. 3 bis 6) derart verstellbar und in unterschiedlichen Einstellpositionen fixierbar ausgebildet, dass der Geräteinsatz 4 mit der Deckplatte 6 bzgl. seiner eingesetzten und durch Verrastung befestigten Einbaustellung relativ zu dem Aufnahmegehäuse 2 in der zur Deckplatte 6 im Wesentlichen senkrechten Richtung ausrichtbar ist. Dabei können auch Ebenen-Schrägstellungen ausgeglichen werden.

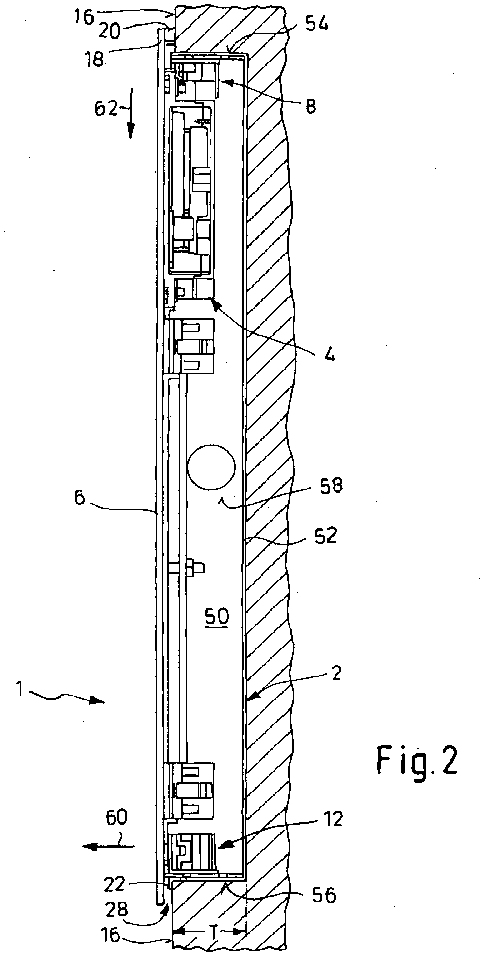

Gemäß Fig. 2 ist das Aufnahmegehäuse 2 insbesondere zur Unterputz-Installation konzipiert, wobei es in dem in Fig. 2 dargestellten, installierten Zustand mit einer bestimmten Mindest-Einsenktiefe T versenkt in einer verputzten Wand-Montagefläche 16 anzuordnen (einzuputzen) ist. Dabei sind die Rastverbindungen 8, 10, 12 bzgl. ihrer Einstellbarkeit derart ausgebildet, dass - unabhängig von der jeweiligen tatsächlichen Einsenktiefe T des Aufnahmegehäuses 2 und einer eventuellen Schrägausrichtung einer Gehäuse-Grundfläche gegenüber der Montagefläche 16 - die Deckplatte 6 mit einem die Grundfläche des Aufnahmegehäuses bevorzugt in allen Richtungen überragenden Rand 18 im eingesetzten und verrasteten Zustand zur Anlage auf der Montagefläche 16 gelangt und zwar insbesondere mittelbar über eine Dichtung 20. Damit liegt die Deckplatte 6 sehr exakt parallel auf der Montagefläche 16.

An dieser Stelle sei nochmals bemerkt, dass die Erfindung in analoger Weise auch für eine sogenannte Hohlwand-Montage geeignet ist, wobei das Aufnahmegehäuse 2 in eine Öffnung einer Hohlwand-Verkleidung einzusetzen ist.

Wie sich insbesondere aus Fig. 7 ergibt, weist die Deckplatte 6 auf ihrer dem Geräteeinsatz 4 zugewandten Innenseite zumindest auf einem Teilbereich ihres Randes 18 eine streifenförmige Dichtung 20 zur dichtenden Anlage auf der Montagefläche 16 auf. Diese Dichtung 20 besteht aus einem weichen, elastischen Material, wie insbesondere Moosgummi oder dergleichen.

Für ihre erfindungsgemäße Einstellbarkeit weisen die Rastverbindungen 8, 10, 12 auf der Seite des Aufnahmegehäuses 2 flache, laschenartige Auflageelemente 22 auf, die das Aufnahmegehäuse 2 in einer zur Deckplatte 6 bzw. zur Montagefläche 16 parallelen Ausrichtung zur Auflage auf der angrenzenden Montagefläche 16 nach außen überragen. Dadurch wird für die Einstellung ein definierter Bezug der Rastverbindungen zur Montagefläche 16 geschaffen, so dass eine sehr genaue Einstellung der Rastverbindungen relativ zur Montagefläche 16 möglich ist, und zwar unabhängig von der tatsächlichen Einsenktiefe T des Aufnahmegehäuses 2.

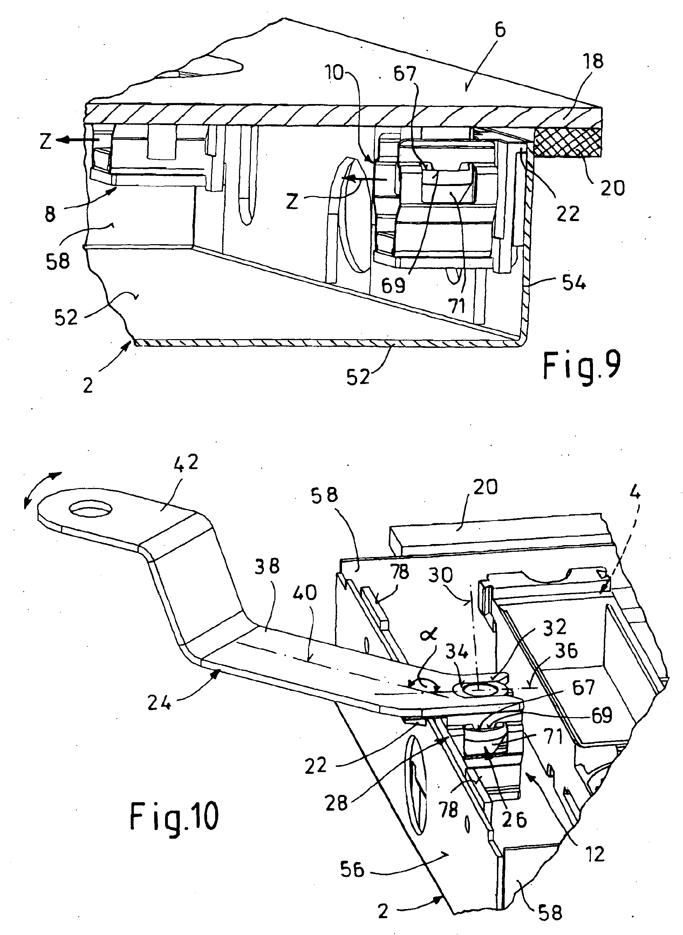

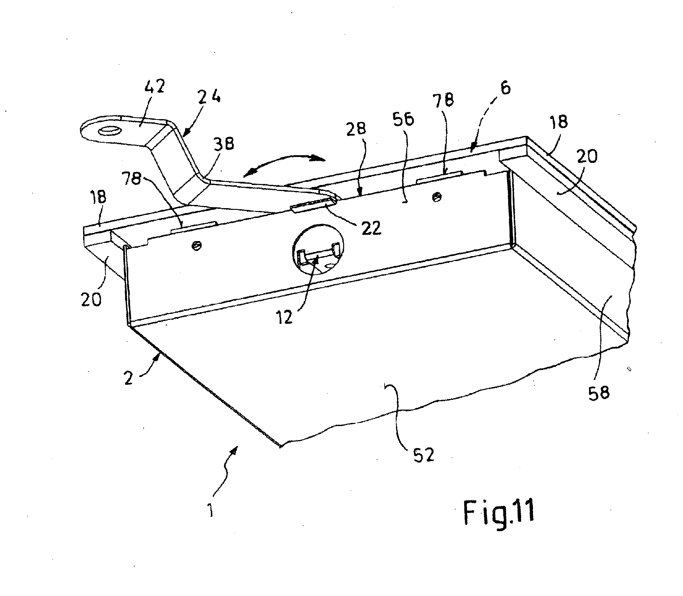

Die Rastverbindungen 8, 10, 12 sind weiterhin derart ausgebildet, dass der Geräteeinsatz 4 durch einfaches Einsetzen in das Aufnahmegehäuse 2 selbsttätig mittelbar über die Deckplatte 6 formschlüssig verrastbar ist. Dabei weist mindestens eine (12) der Rastverbindungen ein zum Verriegeln bzw. Entriegeln mittels eines speziellen Werkzeuges 24 (Fig. 10 und 11) zwischen einer Verriegelungsstellung und einer Lösestellung bewegbares Riegelteil 26 auf. Gemäß Fig. 10 ist das SpezialWerkzeug 24 im dargestellten Beispiel nach Art eines Maulschlüssels ausgebildet und zwecks Entriegeln oder Verriegeln der Rastverbindung 12 durch eine Schlitzöffnung 28 zwischen Deckplatte 6 und Aufnahmegehäuse 2 einführbar. Dabei ist das Riegelteil 26 bevorzugt mittels des Werkzeugs 24 um eine zur Deckplatte 6 senkrechte Drehachse 30 verdrehbar. Das Riegelteil 26 weist zwei gegenüberliegende Schlüsselflächen 32 auf, und das Werkzeug 24 weist ein entsprechend angepaßtes Schlüsselmaul 34 mit einer Öffnungsachse 36 auf. An den Bereich des Schlüsselmauls 34 schließt sich ein Betätigungsabschnitt 38 an, dessen Längsachse 40 mit der Öffnungsachse 36 des Schlüsselmauls 34 einen stumpfen Winkel α von insbesondere etwa 130° bis 140°, vorzugsweise etwa 135°, einschließt. Diese Winkelstellung vereinfacht eine Drehung des Riegelteils 26 um jeweils mindestens 90°. Der Betätigungsabschnitt 38 des Werkzeugs 24 weist an seinem freien Ende einen derart verkröpften Griffabschnitt 42 auf, dass dieser bei der Anwendung von der Wand-Montagefläche 16 beabstandet ist. Dies erleichtert das Ergreifen des Griffabschnittes mit der Hand und vermeidet Kollisionen mit der Wandfläche 16.

Wie sich insbesondere aus Fig. 1 ergibt, ist das Gerät 1 bevorzugt mit einer im Wesentlichen rechteckigen Gerätegrundform des Aufnahmegehäuses 2 und der Deckplatte 6 ausgebildet. In einer bestimmungsgemäßen Montageanordnung wird das Gerät 1 so installiert, dass die Deckplatte 6 in einer vertikalen Ebene parallel zur Montagefläche 16 liegt. Die Schmalseiten der rechteckigen Grundform verlaufen horizontal und die Längsseiten vertikal. Somit sind ein oberer Rand 44 und ein unterer Rand 46 horizontal sowie zwei Seitenränder 48 vertikal auszurichten. Gemäß Fig. 1 und 7 ist die Deckplatte 6 am oberen Rand 44 und an beiden Seitenrändern 48 mit der Dichtung 20 versehen, während der untere Rand 46 im Bereich der Schlitzöffnung 28 für das Werkzeug 24 zumindest teilweise dichtungsfrei ist. Bei der bevorzugten Geräte-Grundform weist das Aufnahmegehäuse 2 gemäß Fig. 3 einen entsprechend rechteckigen Aufnahmeraum 50 mit einem Boden 52 und vier dazu senkrechten Wänden auf, und zwar einer oberen Wand 54, einer unteren Wand 56 und zwei Seitenwänden 58.

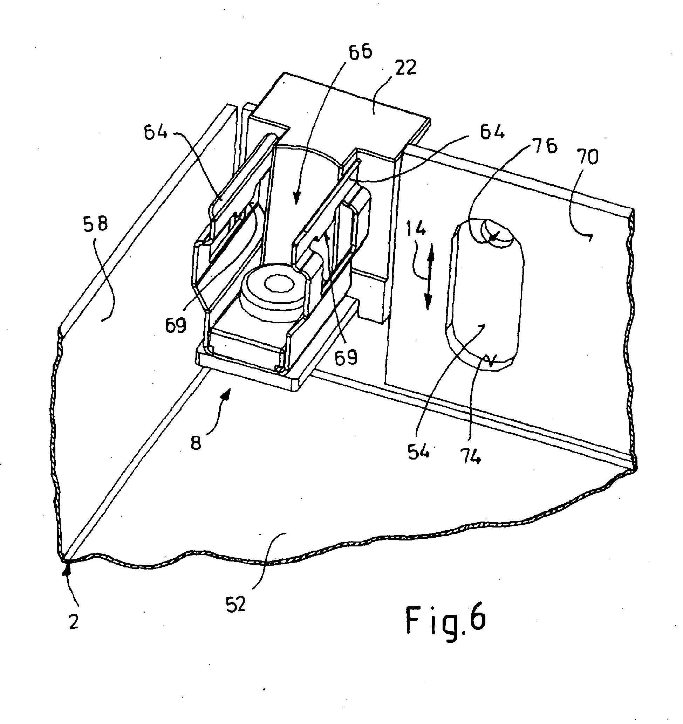

Bei der dargestellten, bevorzugten Ausführung des Gerätes 1 ist weiterhin vorgesehen, dass im Bereich des oberen Randes 44 zwei seitlich beabstandete Rastverbindungen 8, 10 und im mittigen Bereich des unteren Randes 46 eine dritte, mittels des Werkzeugs 24 betätigbare Rastverbindung 12 derart angeordnet und ausgebildet sind, dass der Geräteeinsatz 4 mit der Deckplatte 6 ausgehend von seinem eingesetzten und formschlüssig verrasteten Zustand (Fig. 1 und 2) nach Entriegeln der am unteren Rand 46 vorgesehenen Rastverbindung 12 zunächst nur mit dem unteren Bereich der Deckplatte 6 gemäß Fig. 2 in Pfeilrichtung 60 von dem Aufnahmegehäuse 2 weg bewegbar und anschließend der ganze Geräteeinsatz 4 mit der Deckplatte 6 unter Aufhebung des Formschlusses der oberen Rastverbindungen 8, 10 etwa parallel zur Montagefläche 16 in Pfeilrichtung 62 nach unten herausziehbar ist. Dazu besteht jede Rastverbindung aus einer klammerartigen, zwischen zwei federelastischen Rastschenkeln 64 gebildeten Rastaufnahme 66 und einem in die Rastaufnahme 66 zwischen die Rastschenkel 64 einsetzbaren Riegelteil, und zwar entweder dem bereits erwähnten drehbaren Riegelteil 26 oder einem ortsfest an der Deckplatte 6 befestigten Riegelteil 68. Jedes etwa pilzförmige Riegelteil 26, 68 weist gemäß Fig. 9 Hinterschneidungsflächen 67 auf, die beim Fügevorgang mit Rastkanten 69 der Rastschenkel 64 (siehe dazu auch Fig. 6) formschlüssig rastend zusammenwirken (siehe insbesondere Fig. 8). Die am oberen Rand 44 angeordneten Rastaufnahmen 66 sind hierbei in Entnahmerichtung (Pfeil 62 in Fig. 2) vertikal nach unten offen, so dass die Riegelteile 68 in dieser Richtung (siehe auch die Pfeile Z in Fig. 9) unter Aufhebung des Formschlusses herausgezogen werden können. Die Riegelteile 26, 68 weisen weiterhin vordere, z. B. konische Einführschrägflächen 71 auf, die beim Einführen die Rastschenkel 64 elastisch spreizen.

Für die erfindungsgemäße Einstellbarkeit sind vorzugsweise die Rastaufnahmen 66 entsprechend verstellbar in dem Aufnahmegehäuse 2 angeordnet, während die Riegelteile 26, 68 in der zur Deckplatte 6 senkrechten Richtung ortsfest an der Deckplatte 6 gehalten sind.

Im Bereich des oberen Randes 44 sind vorzugsweise zwei Rastaufnahmen 66 über ein gemeinsames, streifenförmiges Montageteil 70 an der oberen Wand 54 des Aufnahmegehäuses 2 befestigt. Somit bildet das Montageteil 70 mit den zwei Rastaufnahmen 66 eine vormontierte Baugruppe, die in Fig. 4 gesondert dargestellt ist. Am unteren Rand 46 ist die Rastaufnahme 66 mittig über ein weiteres streifenförmiges Montageteil 72 an der unteren Wand 56 des Aufnahmegehäuses 2 befestigt. Hier bildet das Montageteil 72 mit der Rastaufnahme 66 das in Fig. 5 gesondert dargestellte vormontierte Bauteil. Dabei weist jedes Montageteil 70, 72 für die erfindungsgemäße Einstellbarkeit der Rastverbindungen 8, 10, 12 Langlöcher 74 auf. Die Befestigung erfolgt mittels nicht dargestellter, die Langlöcher 74 durchgreifender und in Gewindelöcher 76 des Aufnahmegehäuses 2 eingreifender Schrauben. Wie sich z. B. aus Fig. 3 und 6 ergibt, ist durch die Langlöcher 74 die beschriebene Einstellung in Doppelpfeilrichtung 14 möglich.

Das untere Montageteil 72 weist seitliche Auflageabschnitte 78 für die Deckplatte 6 auf, zwischen denen die Schlitzöffnung 28 für das Werkzeug 24 gebildet ist; siehe hierzu insbesondere Fig. 11.

Abschließend soll noch kurz die Montage des Gerätes 1 erläutert werden. Dazu wird zunächst das Aufnahmegehäuse 2 in üblicher Weise in eine Wand eingeputzt. Dies kann in der Praxis mit unterschiedlicher Einsenktiefe T und häufig auch mit einer schrägen, nicht parallelen Ausrichtung des Bodens 52 relativ zur Wand-Montagefläche 16 erfolgen. Anschließend werden die Rastaufnahmen 66 über die Montageteile 70, 72 in dem Aufnahmegehäuse 2 befestigt. Dabei erfolgt eine Einstellung, indem die Auflageelemente 22 bündig zur Auflage auf der Montagefläche 16 gebracht werden (vgl. Fig. 2). Dadurch sind die Rastverbindungen 8, 10, 12 genau auf die Ebene der Montagefläche 16 justiert. Durch einfaches Einsetzen und Verrasten des Geräteeinsatzes 4 mit der Deckplatte 6 ist eine optimale, wandaufliegende Montage gewährleistet.

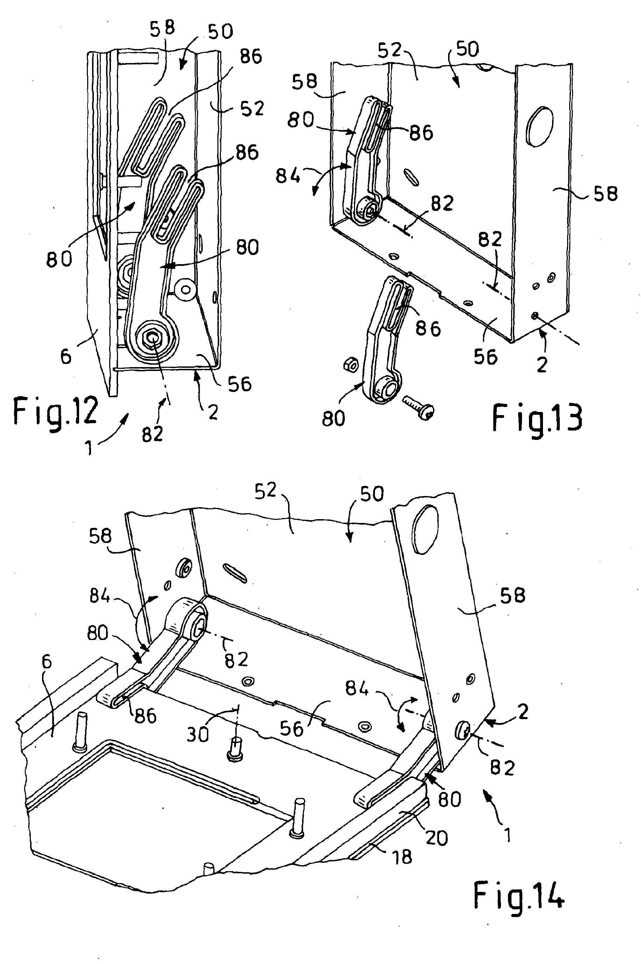

Wie sich noch aus Fig. 12 bis 14 ergibt, kann das Aufnahmegehäuse 2 zur Erleichterung der Montage in seinem unteren Bereich zwei seitliche Montagehalter 80 aufweisen. Vorzugsweise handelt es sich um hebelartige, ausklappbare Montagehalter 80, die an jeweils einer der Seitenwände 58 um eine Achse 82 schwenkbar befestigt sind. Jeder Montagehalter 80 ist dadurch aus einer vollständig innerhalb des Aufnahmeraumes 50 des Aufnahmegehäuses 2 liegenden Nichtgebrauchsstellung (Fig. 12 und 13) in Doppelpfeilrichtung 84 nach vorne und unten in eine Gebrauchsstellung herausklappbar, s. Fig. 14. Jeder Montagehalter weist endseitig einen Aufnahmeschlitz 86 derart auf, dass gemäß Fig. 14 die Deckplatte 6 mit ihrem unteren Randbereich in die Aufnahmeschlitze 86 der Montagehalter 80 einschiebbar und hierdurch in einer von dem Aufnahmegehäuse 2 nach vorne vorstehenden Lage fixierbar ist. In dieser Montagelage sind die Innenseite der Deckplatte 6 und der Aufnahmeraum 50 des Aufnahmegehäuses 2 frei zugänglich, was die Installation, beispielsweise eine Verdrahtung, wesentlich vereinfacht. Nach der Installation (Verdrahtung) braucht nur noch die Deckplatte 6 aus den Aufnahmeschlitzen 86 der Montagehalter 80 herausgezogen zu werden, und nach Einklappen der Montagehalter 80 kann der Geräteeinsatz 4 mit der Deckplatte 6 in der oben beschriebenen Weise in das Aufnahmegehäuse 2 eingesetzt und verrastet werden.

Die Erfindung bezieht sich auch auf die Einzelkomponenten des Gerätes 1, d. h. auf den separaten Geräteeinsatz 4 und auch auf das Aufnahmegehäuse 2 in jeweils erfindungsgemäß angepaßter Ausgestaltung.

Die Erfindung ist nicht auf die dargestellten und beschriebenen Ausführungsbeispiele beschränkt, sondern umfasst auch alle im Sinne der Erfindung gleichwirkenden Ausführungen. So kann das erfindungsgemäße Gerät 1 grundsätzlich auch in Aufputz(AP)- Montage installiert werden, indem das Aufnahmegehäuse 2 auf einer Montagefläche befestigt wird. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Elektrisches Gerät (1), bestehend aus einem ortsfest zu installierenden, dosenartigen Aufnahmegehäuse (2) und einem in das Aufnahmegehäuse (2) einzusetzenden und über Haltemittel lösbar zu befestigenden Geräteeinsatz (4) mit einer vorderen Deckplatte (6), wobei das Aufnahmegehäuse (2) zur Unterputz-Installation konzipiert ist, wobei es in einem installierten Zustand mit einer Einsenktiefe (T) versenkt in einer Wand-Montagefäche (16) anzuordnen ist,
**dadurch gekennzeichnet, dass** die Haltemittel als formschlüssig fügbare Rastverbindungen (8, 10, 12) ausgebildet sind, die in einer zu der Deckplatte (6) senkrechten Richtung gesehen derart verstellbar und in unterschiedlichen Einstellpositionen fixierbar sind, dass der Geräteeinsatz (4) mit der Heckplatte (6) bezüglich seiner eingesetzten und befestigten Einbaustellung relativ zu dem Aufnahmegehäuse (2) in der zu der Deckplatte (6) senkrechten Richtung ausrichtbar ist, wobei die Rastverbindungen (8, 10, 12) derart einstellbar sind, dass - unabhängig von der jeweiligen Einsenktiefe (T) des Aufnahmegehäuses (2) gegenüber der Montagefläche (16) - die Deckplatte (6) mit einem das Aufnahmegehäuse (2) überragenden Rand (18) im eingesetzten und verrasteten Zustand des Geräteeinsatzes (4) zur Auflage auf der Montagefläche (16) gelangt, und wobei die Rastverbindungen (8, 10, 12) für die Einstellbarkeit auf der Seite des Aufnahmegehäuses (2) nach außen überragende Auflageelemente (22) zur Auflage auf der angrenzenden Montagefläche (16) aufweisen.

2. Gerät nach Anspruch 1,
**dadurch gekennzeichnet, dass** die Deckplatte (6) zumindest auf einem Teilbereich ihres Randes (18) eine streifenförmige Dichtung (20) zur dichtenden Anlage auf der Montagefläche (16) aufweist, wobei die Dichtung (20) aus einem weichen, elastischen Material, wie Moosgummi oder dergleichen, besteht.

3. Gerät nach Anspruch 1 oder 2,
**dadurch gekennzeichnet, dass** die Rastverbindungen (8, 10, 12) derart ausgebildet sind, dass der Geräteeinsatz (4) durch Einsetzen in das Aufnahmegehäuse (2) selbsttätig formschlüssig einrastbar ist, wobei mindestens eine (12) der Rastverbindungen (8, 10, 12) ein zum Verriegeln bzw. Entriegeln mittels eines speziellen Werkzeuges (24) zwischen einer Verriegelungsstellung und einer Lösestellung bewegbares Riegelteil (26) aufweist.

4. Gerät nach Anspruch 3,
**dadurch gekennzeichnet, dass** das insbesondere nach Art eines Maulschlüssels ausgebildete Werkzeug (24) zwecks Entriegeln oder Verriegeln der Rastverbindung (12) durch eine Schlitzöffnung (28) zwischen Deckplatte (6) und Aufnahmegehäuse (2) einführbar ist.

5. Gerät nach einem der Ansprüche 1 bis 4,
**gekennzeichnet durch** eine im Wesentlichen rechteckige Geräte-Grundform des Aufnahmegehäuses (2) und der Deckplatte (6), wobei in einer bestimmungsgemäßen Montageanordnung die Deckplatte (6) in einer vertikalen Ebene, ein oberer Rand (44) und ein unterer Rand (46) horizontal sowie zwei Seitenränder (48) vertikal auszurichten sind, und wobei die Deckplatte (6) am oberen Rand (44) und an den beiden Seitenrändern (48) mit der Dichtung (20) versehen ist, während der untere Rand (46) zur Bildung bzw. Freilassung der Schlitzöffnung (28) für das Werkzeug (24) zumindest teilweise dichtungsfrei ist.

6. Gerät nach Anspruch 5,
**dadurch gekennzeichnet, dass** im Bereich des oberen Randes (44) zwei seitliche Rastverbindungen (8, 10) und im mittigen Bereich des unteren Randes (46) eine mittels des Werkzeugs (24) betätigbare dritte Rastverbindung (12) derart angeordnet und ausgebildet sind, dass der Geräteeinsatz (4) ausgehend von seinem eingesetzten und formschlüssig verrasteten Zustand nach Entriegeln der am unteren Rand (46) vorgesehenen Rastverbindung (12) zunächst mit dem unteren Bereich der Deckplatte (6) von dem Aufnahmegehäuse (2) weg bewegbar und anschließend der ganze Geräteinsatz (4) unter Aufhebung des Formschlusses der oberen Rastverbindungen (8, 10) etwa parallel zur Montagefläche (16) nach unten herausziehbar ist.

7. Gerät nach einem der Ansprüche 1 bis 6,
**dadurch gekennzeichnet, dass** jede Rastverbindung (8, 10, 12) aus einer zwischen zwei federelastischen Rastschenkeln (64) gebildeten Rastaufnahme (66) und einem in die Rastaufnahme (66) einsetzbaren Riegelteil (26, 68) besteht, wobei vorzugsweise die Rastaufnahmen (66) verstellbar in dem Aufnahmegehäuse (2) und die Riegelteile (26, 68) an der Deckplatte (6) angeordnet sind.

8. Gerät nach Anspruch 7,
**dadurch gekennzeichnet, dass** am oberen Rand (44) zwei Rastaufnahmen (66) über ein gemeinsames, streifenförmiges Montageteil (70) an dem Aufnahmegehäuse (2) befestigt sind.

9. Gerät nach Anspruch 7 oder 8,
**dadurch gekennzeichnet, dass** am unteren Rand (46) eine mittige Rastaufnahme (66) über ein streifenförmiges Montageteil (72) an dem Aufnahmegehäuse (2) befestigt ist.

10. Gerät nach Anspruch 8 oder 9,
**dadurch gekennzeichnet, dass** das/jedes Montageteil (70, 72) für die Einstellbarkeit der Rastverbindungen (8, 10, 12) Langlöcher (74) aufweist, wobei die Befestigung mittels die Langlöcher (74) durchgreifender und in Gewindelöcher (76) des Aufnahmegehäuses (2) eingreifender Schrauben erfolgt.

11. Gerät nach einem der Ansprüche 8 bis 10,
**dadurch gekennzeichnet, dass** die den oberen zwei Rastaufnahmen (66) zugeordneten Riegelteile (68) starr an der Deckplatte (6) befestigt sind.

12. Gerät nach einem der Anspruche 9 bis 11,
**dadurch gekennzeichnet, dass** das der unteren Rastaufnahme (66) zugeordnete Riegelteil (26) - mittels des Werkzeugs (24) durch die Schlitzöffnung (28) hindurch - drehbar an der Deckplatte (6) gefagert ist.

13. Gerät nach einem der Ansprüche 1 bis 12,
**dadurch gekennzeichnet, dass** das Aufnahmegehäuse (2) in seinem - bezogen auf eine bestimmungsgemäß installierte Montagelage - unteren Bereich Montagehalter (80) derart aufweist, dass der Geräteeinsatz (4) mit der Deckplatte (6) über die Montagehalter (80) vorübergehend in einer geöffneten Montagelage an dem Aufnahmegehäuse (2) fixierbar ist.

14. Geräteeinsatz (4) für ein elektrisches Gerät (1) nach einem der Ansprüche 1 bis 13 und zum Einsetzen in ein entsprechendes Aufnahmegehäuse (2).

15. Aufnahmegehäuse (2) für ein elektrisches Gerät (1) nach einem der Ansprüche 1 bis 13 und zur Aufnahme eines entsprechenden Geräteeinsatzes (4).

## Claims

1. An electrical apparatus (1), consisting of a box-like receiving housing (2) which is to be installed in fixed manner and an apparatus insert (4), which is to be inserted into the receiving housing (2) and is to be fastened detachably via holding means, with a front cover plate (6), the receiving housing (2) being designed for concealed installation, wherein it, in an installed state, is to be arranged flush-mounted in a wall mounting surface (16) with a recessing depth (T),
**characterised in that** the holding means are designed as latch connections (8, 10, 12) which can be joined in form-locked manner, which, viewed in a direction perpendicular to the cover plate (6), can be adjusted and can be fixed in different set positions such that the apparatus insert (4) with the cover plate (6) with respect to its inserted and fastened installation position relative to the receiving housing (2) can be oriented in the direction perpendicular to the cover plate (6), the latch connections (8, 10, 12) being adjustable such that - independently of the respective recessing depth (T) of the receiving housing (2) relative to the mounting surface (16) - the cover plate (6), with an edge (18) which projects over the receiving housing (2), in the inserted and latched state of the apparatus insert (4) comes to lie on the mounting surface (16), and the latch connections (8, 10, 12) for adjustability on the side of the receiving housing (2) having resting elements (22) which project outwards for resting on the adjoining mounting surface (16).

2. An apparatus according to Claim 1, **characterised in that** the cover plate (6), at least on a partial region of its edge (18), has a strip-shaped seal (20) for sealing contact on the mounting surface (16), the seal (20) consisting of a soft, elastic material, such as foam rubber or the like.

3. An apparatus according to Claim 1 or 2, **characterised in that** the latch connections (8, 10, 12) are designed such that the apparatus insert (4) can be engaged automatically in form-locked manner by insertion into the receiving housing (2), with at least one (12) of the latch connections (8, 10, 12) having a locking part (26) which is movable between a locked position and a released position for locking or unlocking by means of a special tool (24).

4. An apparatus according to Claim 3, **characterised in that** the tool (24) formed in particular in the manner of an open-ended spanner, for the purpose of unlocking or locking the latch connection (12), can be introduced through a slotted opening (28) between the cover plate (6) and receiving housing (2).

5. An apparatus according to one of Claims 1 to 4, **characterised by** a substantially rectangular apparatus base form of the receiving housing (2) and the cover plate (6), wherein, in a mounting arrangement in accordance with the regulations, the cover plate (6) is to be oriented in a vertical plane, an upper edge (44) and a lower edge (46) are to be oriented horizontally and two side edges (48) are to be oriented vertically, and wherein the cover plate (6) is provided on the upper edge (44) and on the two side edges (48) with the seal (20), while the lower edge (46) is at least partially seal-free for forming or leaving free the slotted opening (28) for the tool (24).

6. An apparatus according to Claim 5, **characterised in that** in the region of the upper edge (44) two lateral latch connections (8, 10), and in the central region of the lower edge (46) a third latch connection (12), which can be actuated by means of the tool (24), are arranged and formed such that the apparatus insert (4), starting from the state in which it is inserted and locked in form-locked manner, once the latch connection (12) provided on the lower edge (46) has been unlocked, can initially be moved away from the receiving housing (2) with the lower region of the cover plate (6) and then the entire apparatus insert (4), cancelling out the form-lock of the upper latch connections (8, 10), can be pulled out downwards approximately parallel to the mounting surface (16).

7. An apparatus according to one of Claims 1 to 6, **characterised in that** each latch connection (8, 10, 12) consists of a latch receptacle (66) formed between two resilient latch arms (64), and of a locking part (26, 68) which can be inserted into the latch receptacle (66), with preferably the latch receptacles (66) being arranged adjustably in the receiving housing (2) and the locking parts (26, 68) on the cover plate (6).

8. An apparatus according to Claim 7, **characterised in that** on the upper edge (44) two latch receptacles (66) are fastened to the receiving housing (2) via a common, strip-shaped mounting part (70).

9. An apparatus according to Claim 7 or 8, **characterised in that** on the lower edge (46) a central latch receptacle (66) is fastened to the receiving housing (2) via a strip-shaped mounting part (72).

10. An apparatus according to Claim 8 or 9, **characterised in that** the/each mounting part (70, 72) has elongate holes (74) for adjustability of the latch connections (8, 10, 12), the fastening taking place by means of screws which pass through the elongate holes (74) and engage in threaded holes (76) of the receiving housing (2).

11. An apparatus according to one of Claims 8 to 10, **characterised in that** the locking parts (68) associated with the upper two latch receptacles (66) are fastened rigidly to the cover plate (6).

12. An apparatus according to one of Claims 9 to 11, **characterised in that** the locking part (26) associated with the lower latch receptacle (66) - by means of the tool (24), through the slotted opening (28) - is mounted rotatably on the cover plate (6).

13. An apparatus according to one of Claims 1 to 12, **characterised in that** the receiving housing (2) in its lower region - relative to a mounting position which is installed in accordance with the regulations - has mounting holders (80) such that the apparatus insert (4) with the cover plate (6) can be fixed temporarily in an opened mounting position to the receiving housing (2) via the mounting holders (80).

14. An apparatus insert (4) for an electrical apparatus (1) according to one of Claims 1 to 13 and for insertion in a corresponding receiving housing (2).

15. A receiving housing (2) for an electrical apparatus (1) according to one of Claims 1 to 13 and for receiving a corresponding apparatus insert (4).

## Revendications

1. Appareil (1) électrique, formé par un boîtier de type logement (2) en forme de boîte, à installer de manière fixe, et par un insert (4), à insérer dans le boîtier de réception (2), à fixer de manière amovible par des moyens de fixation et muni d'une plaque de protection (6) avant, le boîtier de type logement (2) étant conçu pour un montage encastré, sachant que, dans une position montée, il est agencé de manière encastrée avec une profondeur d'encastrement (T) dans une surface de montage (16) d'un mur,
**caractérisé en ce que** les moyens de fixation sont réalisés sous forme de systèmes d'assemblage à encliquetage (8, 10, 12) à assembler par conjugaison de forme, lesquels, considérés dans une direction perpendiculaire à la plaque de protection (6), peuvent être réglés et peuvent être fixés dans différentes positions de réglage, de telle sorte que l'insert (4) avec la plaque de protection (6) peut être orienté, dans sa position de montage insérée et fixée par rapport au boîtier de type logement (2), dans la direction perpendiculaire à la plaque de protection (6), les systèmes d'assemblage à encliquetage (8, 10, 12) pouvant être réglés de telle sorte que - indépendamment de la profondeur d'encastrement (T) respective du boîtier de type logement (2) par rapport à la surface de montage (16) - la plaque de protection (6), dans la position insérée et bloquée de l'insert (4), parvient avec un bord (18), s'avançant au-delà du boîtier de type logement (2), en appui sur la surface de montage (16), et les systèmes d'assemblage à encliquetage (8, 10, 12) comportant, pour le réglage, des éléments d'appui (22), en saillie vers l'extérieur sur le côté du boîtier de type logement (2) et destinés à prendre appui sur la surface de montage (16) adjacente.

2. Appareil selon la revendication 1,
**caractérisé en ce que** la plaque de protection (6) comporte, au moins sur une zone partielle de son bord (18), une garniture d'étanchéité (20) en forme de bande destinée à venir en appui étanche sur la surface de montage (16), la garniture d'étanchéité (20) étant réalisée dans un matériau souple, élastique, tel que le caoutchouc mousse ou similaire.

3. Appareil selon la revendication 1 ou 2,
**caractérisé en ce que** les systèmes d'assemblage à encliquetage (8, 10, 12) sont réalisés de telle sorte que l'insert (4), sous l'effet de son introduction dans le boîtier de type logement (2), est automatiquement encliquetable par conjugaison de forme, sachant qu'au moins l'un (12) des systèmes d'assemblage à encliquetage (8, 10, 12) comporte un élément de verrouillage (26) à verrouiller ou déverrouiller au moyen d'un outil (24) spécial et mobile entre une position de verrouillage et une position de désolidarisation.

4. Appareil selon la revendication 3,
**caractérisé en ce que** l'outil (24), configuré en particulier sous la forme d'une clé plate, peut être introduit par une fente (28) entre la plaque de protection (6) et le boîtier de type logement (2) en vue du déverrouillage ou verrouillage du système d'assemblage à encliquetage (12).

5. Appareil selon l'une quelconque des revendications 1 à 4,
**caractérisé par** une forme de base sensiblement rectangulaire pour le boîtier de type logement (2) et la plaque de protection (6), sachant que dans un montage conforme à sa destination, la plaque de protection (6) doit être orientée dans un plan vertical, un bord supérieur (44) et un bord inférieur (46) doivent être orientés horizontalement et deux bords latéraux (48) doivent être orientés verticalement, et sachant que la plaque de protection (6) est munie de la garniture d'étanchéité (20) au niveau de son bord supérieur (44) et des deux bords latéraux (48), alors que le bord inférieur (46) ne comporte pas de garniture d'étanchéité au moins partiellement en vue de former ou dégager la fente (28) pour l'outil (24).

6. Appareil selon la revendication 5,
**caractérisé en ce que** dans la zone du bord supérieur (44) sont agencés et réalisés deux systèmes d'assemblage à encliquetage (8, 10) latéraux et dans la zone centrale du bord inférieur (46) est agencé et réalisé un troisième système d'assemblage à encliquetage (12) actionnable par l'outil (24), de telle sorte que l'insert (4), à partir de sa position insérée et bloquée par conjugaison de forme, peut être déplacé, après le déverrouillage du système d'assemblage à encliquetage (12) prévu sur le bord inférieur (46), d'abord avec la zone inférieure de la plaque de protection (6) pour s'écarter du boîtier de type logement (2) et ensuite la totalité de l'insert (4) peut être extraite vers le bas sensiblement parallèlement à la surface de montage (16), moyennant la désolidarisation de l'assemblage par conjugaison de forme des systèmes d'assemblage à encliquetage (8, 10) supérieurs.

7. Appareil selon l'une quelconque des revendications 1 à 6,
**caractérisé en ce que** chaque système d'assemblage à encliquetage (8, 10, 12) est formé par un logement d'encliquetage (66), formé entre deux branches (64) élastiquement flexibles, et par un élément de verrouillage (26, 68) pouvant être introduit dans le logement d'encliquetage (66), sachant que de préférence les logements d'encliquetage (66) sont agencés de manière réglable dans le boîtier de type logement (2) et les éléments de verrouillage (26, 68) sont agencés sur la plaque de protection (6).

8. Appareil selon la revendication 7,
**caractérisé en ce que**, sur le bord supérieur (44), deux logements d'encliquetage (66) sont fixés sur le boîtier de type logement (2) par l'intermédiaire d'un élément de montage (70) commun en forme de bande.

9. Appareil selon la revendication 7 ou 8,
**caractérisé en ce que**, sur le bord inférieur (46), un logement d'encliquetage (66) central est fixé sur le boîtier de type logement (2) par l'intermédiaire d'un élément de montage (72) en forme de bande.

10. Appareil selon la revendication 8 ou 9,
**caractérisé en ce que** le/chaque élément de montage (70, 72) comporte des trous oblongs (74) pour le réglage des systèmes d'assemblage à encliquetage (8, 10, 12), la fixation étant réalisée par des vis traversant les trous oblongs (74) et s'engageant dans des trous filetés (76) du boîtier de type logement (2).

11. Appareil selon l'une quelconque des revendications 8 à 10,
**caractérisé en ce que** les éléments de verrouillage (68), associés aux deux logements d'encliquetage (66) supérieurs, sont fixés de manière rigide à la plaque de protection (6).

12. Appareil selon l'une quelconque des revendications 9 à 11,
**caractérisé en ce que** l'élément de verrouillage (26), associé au logement d'encliquetage (66) inférieur, est logé de manière rotative - au moyen de l'outil (24) passant par la fente (28) - sur la plaque de protection (6).

13. Appareil selon l'une quelconque des revendications 1 à 12,
**caractérisé en ce que** le boîtier de type logement (2), dans sa zone inférieure - par référence à la position de montage installée conformément à sa destination - comporte un support de montage (80), de telle sorte que l'insert (4) peut être fixé avec la plaque de protection (6), par l'intermédiaire du support de montage (80), provisoirement dans une position de montage ouverte sur le boîtier de type logement (2).

14. Insert (4) pour un appareil (1) électrique selon l'une quelconque des revendications 1 à 13 et destiné à être inséré dans un boîtier de type logement (2) correspondant.

15. Boîtier de type logement (2) pour un appareil (1) électrique selon l'une quelconque des revendications 1 à 13 et destiné à recevoir un insert (4) correspondant.
